# EUROPEAN PATENT SPECIFICATION

(11) **EP 2 283 609 B1**
(45) Date of publication and mention of the grant of the patent: **23.11.2011**
(21) Application number: 09738447.3
(22) Date of filing: 26.03.2009
(51) Int. Cl.: H04L 12/18, H04L 12/28, G06F 3/00, H04N 7/18

(54) **VIDEO AND VOICE COMMUNICATION SYSTEM CONTROLLED BY A REMOTE CONTROL**
MITTELS FERNSTEUERUNG GESTEUERTES VIDEO- UND SPRACHKOMMUNIKATIONSSYSTEM
SYSTÈME DE COMMUNICATION VIDÉO ET AUDIO COMMANDÉ PAR UNE TÉLÉCOMMANDE

(30) Priority: 30.04.2008 FR 0802415
(43) Date of publication of application: 16.02.2011
(73) Proprietor: Sigma Mediterranee, 11000 Carcassonne (FR)
(72) Inventor: CHAVERNAC, Pascal, F-11000 Carcassonne (FR)
(74) Representative: Fourcade, Emmanuelle
(86) International application number: PCT/IB2009/005082
(87) International publication number: WO 2009/133434

(56) References cited:
- US-A1- 2005 055 472
- US-A1- 2006 165 092
- US-A1- 2007 256 105

## Description

The present invention relates to a video and voice communication system controlled by a remote control device.

There are many systems enabling at least two remote users to communicate and converse during a voice, video or both video and voice conversation. Many websites and Internet communications software allow users of computers to organize real videoconferences through a digital camera known as a "webcam", a microphone or similar devices connected to their computer. All these instant messaging services are generally free of charge but have the disadvantage of requiring the use of a computer for each user wishing to communicate with another user.

This communication technology is not very convenient or easy to use in the case of the elderly or people who have difficulties in handling computers.

Some messaging software, such as the software Skype^{™}, also allow the user of a computer connected to the Internet to make a call to a fixed or mobile phone using a microphone connected to his computer. However, this service is not reversible and a phone subscriber or one who has a mobile phone contract is unable to call a contact connected to this type of software.

It is also well known to use the conventional telephone network in order to conduct a conversation in both video and voice form between multiple users. It suffices in this case for the various users wishing to participate in the conversation to be equipped with relatively sophisticated phones including an integrated camera and microphone, and to make the necessary arrangements with the telephone operator to access this service.

This technology is also increasingly popular among mobile phone operators, in particular thanks to the development of technologies known as "3G", "3G +" or any other technology derived from the standard known as "UMTS".

One of the drawbacks of videoconferencing supported by a telephone network is that it results in a significant cost to the caller as compared to videoconferencing based on Internet technology.

There is currently no remedy system for these drawbacks, in particular allowing the user of a computer or a mobile phone to contact, by voice and video, a user with no computer or mobile phone and vice versa, allowing a user with no computer or mobile phone to contact, by voice and video, the user of a computer or mobile phone.

US 2005/055472 discloses a video and voice communication system controlled by an administration server, in which each user can configure the administration server by using a web server or a control server.

US 2007/256105 discloses an entertainment device configured for interactive detection and security vigilant monitoring in communication with a control server including a remote control device.

An objective of the present invention is to remedy these deficiencies.

To this end, the video and voice communication system controlled by a remote control device, which the invention relates to, comprises:
- at least one box comprising:
   a) a hardware part including in addition to a data storage unit, a RAM, a processor, and any means necessary for operating this box as an independent data processing unit, first wired or wireless connection means able to connect said box to a communication network, second wired or wireless means able to connect said box to an image broadcasting device, means for transferring data from an external unit or to it, at least one memory card reader, at least one camera and/or one microphone integrated or not in said box, at least one loudspeaker integrated or not in the box, at least one visual or audio call indicator, and a cell, especially an infrared or radiofrequency cell, allowing the box to be controlled by a remote control device; and
   b) a software part including a network management interface accessible and configurable remotely through a computer-type device or mobile phone connected to the same network as said box, access to this network interface being protected by an identifier specific to said box and by a password, said box having a single predefined static address enabling it to be located on the communication network to which it is connected; said software part also comprises a Web server, especially an HTTP Web server, a server enabling transmissions to be secured over the network by encrypting data, a database server, a video server and a web client enabling the pages generated by the Web server (WS) to be displayed on the image broadcasting device;
- said remote control device including broadcast means, especially infrared or radiofrequency means, enabling communication with said cell of the box and command buttons enabling the broadcasting of pages generated by the Web server of said box to be activated or not on the image broadcasting device, and the loudspeaker, the microphone and the camera comprised in said box to be activated or not;
- an administration server of the box(es) of the system, connected to the same communication network as this or these box(es).

With the system according to the invention, the user of a computer-type device or mobile phone who knows the ID of a box and its associated password can configure it through a website hosted on the box by accessing the database and modifying it, i.e. it may allow the user of a box to establish video and voice communications with it or to receive video and voice communications from his computer-type device or mobile phone.

When a call is made by a remote computer or mobile phone to a box, the web server of this box checks by a PHP script if the identity of the computer or the phone is known, i.e. if this identity has previously been registered in the database of the box. If the user is not registered, the box automatically rejects the call. If the user is recognized by the database server, a visual or audio call indicator alerts the user of the box he is receiving a call. An audio signal can also be emitted by the loudspeaker included in the box. The box user can either accept the call or reject it by pressing the corresponding button of the remote control device connected to the box.

If the call is accepted, the box emits any video produced by the calling user's camera on the image broadcasting device connected to the box. The calling user can see his contact through the camera connected to the box and integrated or not with it. The same goes for the audio communication which can be achieved through the loudspeaker and the microphone included in the box.

The use of the box is particularly simple since it is ready to use and requires no direct software infrastructure in order to be used. The act of making or receiving calls is entirely controlled by the remote control device associated with the box and is therefore particularly convenient for the elderly or people with little or no computer skills.

The administration server of all the boxes performs, amongst other things, the following tasks:
- updating boxes;
- checking the availability of boxes;
- centralizing logs (reports);
- forwarding addresses based on the identification of a box;
- creating backups and / or restoring box configurations, and
- awarding certificates.

According to another feature of the communication system of the invention, said communication network is the Internet or a GSM, RTC, VOIP or TOIP network.

According to another feature of the communication system of the invention, said image and/or sound broadcasting device is a TV or any other type of display device.

According to another feature of the communication system of the invention, said means for transferring data from an external unit or to it is formed by a USB interface.

According to another feature of the communication system of the invention, said remote control device is a remote control.

According to another feature of the communication system of the invention, said server enabling transmissions over the network to be secured by encrypting data is an OpenSSL server.

According to another feature of the communication system of the invention, said database server is a standard MySQL server.

According to another feature of the communication system of the invention, said video server is the free server with no charge Red5 or FMS server.

According to another feature of the communication system of the invention, said Web server is a standard Apache server.

According to another feature of the communication system of the invention, said web client is that marketed under the brand Flashplayer® or Adobe Integrated Runtime AIR®.

According to another feature of the communication system of the invention, the command buttons of said remote control device have a bearing surface equal to at least the area of a fingerprint.

According to another feature of the communication system of the invention, said remote control device includes a casing made of an elastic and/or absorbent material in order to protect its structure against shocks.

Advantageously, the communication system according to the invention allows, in addition to being able to communicate in video and voice, photos to be shared between the user of a computer or mobile phone and the user of a box, messages such as alerts or reminders from a computer or mobile phone to be displayed on the image broadcasting device connected to a box.

The invention will be clearly understood, and other features and advantages thereof will become apparent with reference to the appended schematic drawing which shows, by way of nonlimiting example, a preferred embodiment of the video and voice communication system controlled by a remote control device to which the invention relates.
Figure 1 is a schematic diagram of the general operation of the present invention;
figure 2 is an algorithm of the operation of the logic of a box according to the invention;
figure 3 is a perspective view of a box, of a digital camera connected to the box and of a remote control device according to the invention;
figure 4 is a front view of a box according to the invention;
figure 5 is a rear view of a box according to the invention;
figure 6 is a perspective view of a remote control device according to the invention, and
figure 7 is a perspective view of a digital camera to be connected to a box according to the invention.

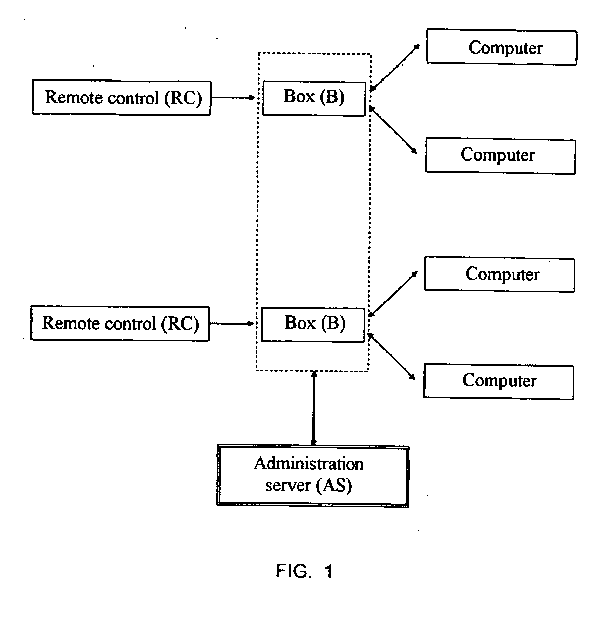

Figure 1 illustrates a schematic diagram of a video and voice communication system controlled by a remote control device, including:
- a set of several boxes (B) connected to the Internet, each containing a single static IP address, and including a particular identifier and an associated password;
- a set of remote controls (RC), each of them checking a corresponding box (B);
- an administration server (AS) common to different boxes, also connected to the Internet.

Each box (B) includes in its hardware part the resources needed for it to operate as an autonomous data processing unit, including a data storage unit, for example, disk drive or SSD, RAM and processor.

Each box (B) can communicate with different computers connected to the Internet simultaneously or not, through an HTTP type Web server (WS) included therein. The connection between a box (B) and a computer is perfectly secure, thanks to an OpenSSL server included in each box (B).

To this end, each box (B) must first be configured, i.e. a unique identifier and password must be associated with every computer authorized to communicate with said box (B). This information is stored in a database (DB) of the MySQL type included in the box (B). The inscription of the identification of different computers is performed via a network management interface accessible and configurable remotely via any computer connected to the Internet. Access to this network interface is protected by an identifier unique to the box (B) and a password associated with it.

The administration server (AS) of all boxes (B) allows among others the following tasks to be performed:
- updating boxes (B);
- checking the availability of boxes (B);
- centralizing logs (reports);
- forwarding addresses based on the identification of a box (B);
- creating backups and / or restoring configurations of boxes (B), and
- awarding certificates.

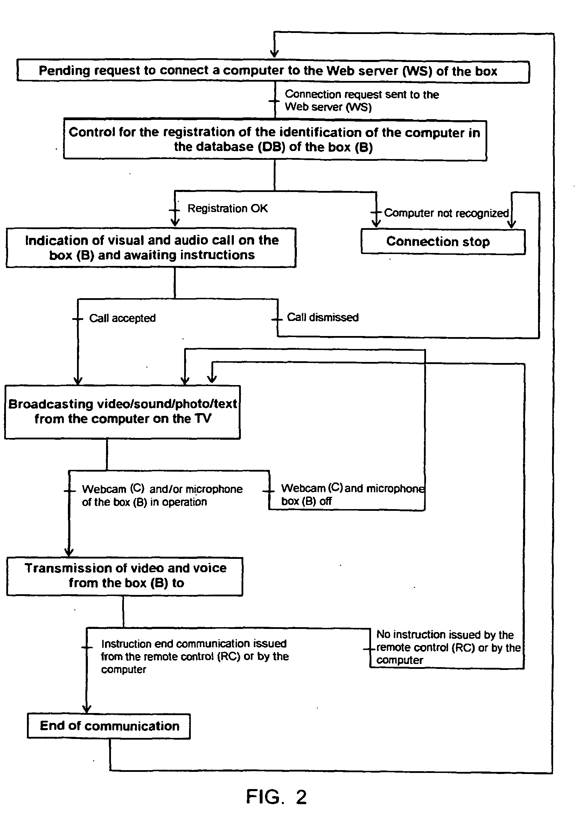

Figure 2 is an algorithm of the operation of the logic of a box (B) and shows more precisely the software operating on it.

To simplify the algorithm presented, the following hypothesis is put forward:
- the configuration of the box (B) (pre-registration of computers allowed to communicate with the box) has already been achieved by the network management interface on the box.

The steps of the algorithm are described below in chronological order:
1. The box (B) is in standby and does not communicate with any computer.
2. When a computer attempts to connect to the box (B) through the Web server (WAS) included in the box, a PHP script then checks in the database (DB) included in the box (B) that this computer has already been registered in this database (DB) and the ID and password sent by it are correct.
3. Two scenarios are possible:
   - the computer is not recognized either because it is not registered in the database (DB), or because the identifier and/or password entered by the user of the computer on the Web server (WS) are incorrect; In this case, the connection between the computer and the box (B) is stopped instantly, there will therefore be no possible communication between the computer and box (B);
   - the computer is correctly identified; In this case, the box (B) will indicate to its user, visually and/or audibly, that a call is pending; The algorithm therefore goes to the next step;
4. Again, two options are possible:
   - either the user of the box (B) rejects the call, using the remote control (RC) on the box (B), in which case the connection between the computer and the box (B) is stopped instantly;
   - or the user of the box (B) accepts the call, in which case the broadcasting of the video sent by a webcam connected to the computer and the sound sent by a microphone connected to the same computer are turned on, that is to say the images received by the box (B) are displayed on the TV to which the box (B) is connected and the sound comes from the loudspeaker integrated in the box (B). The user of the computer may want to share photos with the user of the box (B), and the photos sent from the computer will thus be displayed on the TV connected to the box (B). Similarly, text messages can also be routed to the box (B).
5. If the webcam (C) connected to the box (B) and the microphone integrated into the latter are activated, there is also a reciprocal transmission of video and sound to the computer with which the box (B) is communicating.
6. If any user of the box (B) or the computer decides to end the connection, either using the remote control (RC) on the box (B) or if the user of the computer disconnects from the Web server (WS), the communication is simultaneously stopped.

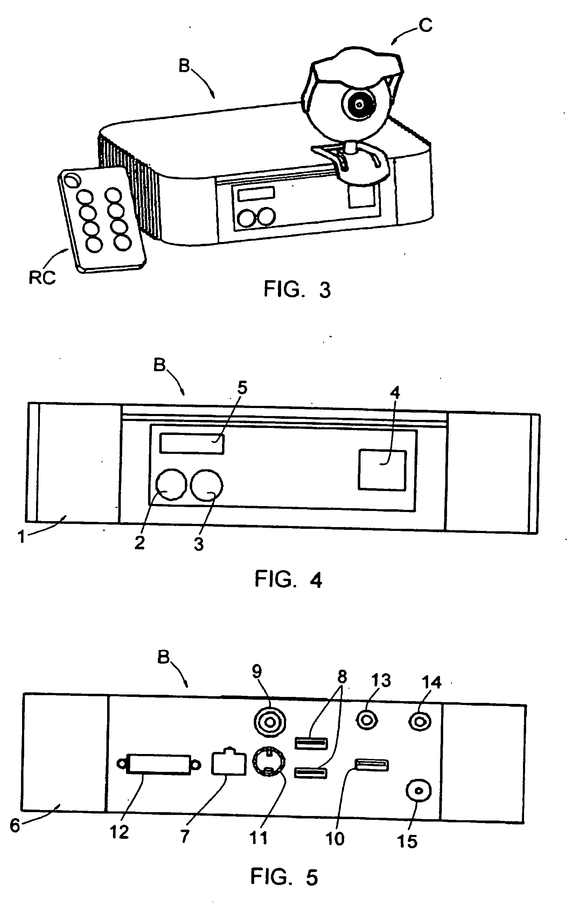

Figure 3 shows a box (B), a webcam (C) connected to it, and a remote control (RC).

As shown more particularly in Figures 4 and 5, the box (B) includes on its front face (1) a green light (2), a red light (3), an On/Off button (4), and an infrared or radiofrequency cell (5). The rear face (6) of the box (B) includes an Ethernet RJ45 type plug (7) to connect the box (B) to the Internet, two USB ports (8), an optical fiber output (9), an HDMI interface (10), an S-Video or Y/C output (11), a VGA output (12), an audio output (13), an audio input (14), and a power connector (15).

In operation, the red light (3) flashes to indicate to the user of the box (B) when an application for communication is sent by a computer. Simultaneously, a warning sound is emitted by the loudspeaker integrated into the box (B). When communication is established, the green light (2) is on permanently and the loudspeaker integrated into the box (B) restores the voice of the user of the computer speaking on his microphone.

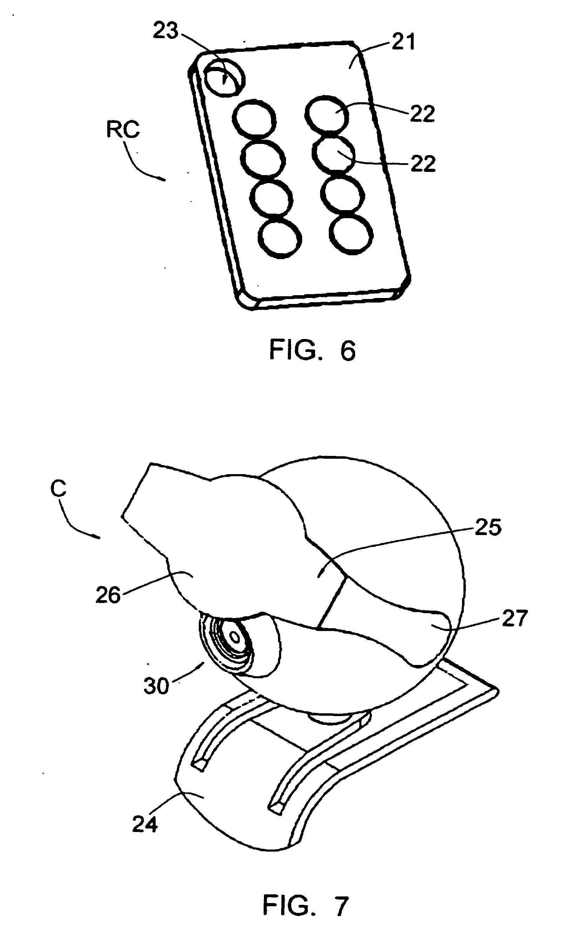

Figure 6 shows a remote control (RC) comprising an envelope (21) made of elastomer and including means of infrared or radiofrequency emission (not shown) for communication with the IR or RF cell (5) of the box, command buttons (22), and a through hole (23).

The buttons (22) of the remote control (RC) have a bearing surface approximately equal to the area of a fingerprint. As a result, an elderly person can see and access the buttons (22) easily.

These buttons (22) permit, in addition to enabling or disabling the broadcasting of images on the TV, the loudspeaker, microphone and webcam (C) included in the box (B) to be activated or not and management of all communications sent to a computer or received from a computer to be simplified. The through hole (23) allows the remote control (RC) to be attached to a key ring or to be worn around the neck.

Figure 7 shows a webcam (C) to be connected to a box (B). This webcam (C) is conventional and will therefore not be described in detail. It includes a foot (24) shaped so as to be placed on the box (B) in a manner suited to the angles of said box (B). It is equipped with a pivoting flap (25) comprising a central concealing part (26) and two side arms (27) mounted pivoting on its body, this flap (25) being movable between the represented position in which said central part is apart from the lens (30) of the webcam (C), and a concealing position, in which said central part (26) conceals the lens (30) of the webcam.

The invention thus provides a video and voice communication system controlled by a remote control device alleviating the drawbacks of existing systems, in particular allowing the user of a computer or mobile phone to contact, by video and voice, a user with no computer or mobile phone, and vice versa, allowing a user with no computer or mobile phone to contact, by voice and video, the user of a computer or a mobile phone.

It goes without saying that the invention is not limited to the embodiment described above by way of example but extends to all embodiments covered by the claims appended below.

## Claims

1. - A video and voice communication system controlled by a remote control device (RC), **characterized in that** it comprises:
- at least one box (B) comprising:
a) a hardware part including in addition to a data storage unit,
a RAM,
a processor,
means for operating this box (B) as an independent data processing unit,
first connection means (7) connecting said box (B) to a communication network,
second means (9, 10, 11, 12, 13) connecting said box (B) to an image broadcasting device,
means (8) for exchanging data with an external unit,
at least one camera and/or one microphone (C) integrated or not in said box (B),
at least one loudspeaker integrated or not in the box (B),
at least one call indicator, and
a cell (5) allowing the box (B) to be controlled by a remote control device (RC); and
b) a software part
including a network management interface accessible and configurable remotely through a computer-type device or mobile phone connected to the same network as said box (B),
said box (B) having a single predefined address enabling it to be located on the communication network to which it is connected,
said software part comprising
a Web server (WS),
a server enabling transmissions to be secured over the network by encrypting data,
a database server (DB), a video server and
a web client enabling the pages generated by the Web server (WS) to be displayed on the image broadcasting device;
- said remote control device (RC) including
broadcast means enabling communication with said cell (5) of the box (B) and command buttons (22) enabling the broadcasting of pages generated by the Web server (WS) of said box (B) to be activated or not on the image broadcasting device, and the loudspeaker, the microphone and the camera (C) comprised in said box (B) to be activated or not;
- an administration server (AS) of the box(es) (B) of the system, connected to the same communication network as this or these box(es) (B).

2. - The communication system according to claim 1, **characterized in that** said communication network is the Internet or a GSM, RTC, VOIP or TOIP network.

3. - The communication system according to claim 1 or claim 2, **characterized in that** said image and/or sound broadcasting device is a TV.

4. - The communication system according to one of claims 1 to 3, **characterized in that** said means (8) for exchanging data with an external unit is formed by a USB interface (8).

5. - The communication system according to one of claims 1 to 4, **characterized in that** said remote control device is a remote control (RC).

6. - The communication system according to one of claims 1 to 5, **characterized in that** said server enabling transmissions over the network to be secured by encrypting data is an OpenSSL server.

7. - The communication system according to one of claims 1 to 6, **characterized in that** said database server (DB) is a standard My SQL server.

8. - The communication system according to one of claims 1 to 7, **characterized in that** said video server is a Red5 or FMS server.

9. - The communication system according to one of claims 1 to 8, **characterized in that** said Web server (WS) is a standard Apache server.

10. - The communication system according to one of claims 1 to 9, **characterized in that** said web client is that marketed under the brand Flashplayer® or Adobe Integrated Runtime AIR®.

11. - The communication system according to one of claims 1 to 10, **characterized in that** the command buttons (22) of said remote control device (RC) have a bearing surface equal to at least the area of a fingerprint.

12. - The communication system according to one of claims 1 to 11, **characterized in that** said remote control device (RC) includes a casing (21) made of an elastic and/or absorbent material in order to protect its structure against shocks.

## Patentansprüche

1. - Ein Video- und Sprachkommunikationssystem, das über eine Fernsteuerungsvorrichtung (RC) gesteuert wird, **dadurch gekennzeichnet, dass** es folgendes umfasst:
- zumindest eine Box (B), umfassend:
a) einen Hardwareabschnitt umfassend zusätzlich zu einer Datenspeichereinheit,
einen RAM-Speicher,
einen Prozessor,
Vorrichtungen zum Betreiben dieser Box (B) als eigenständige Datenverarbeitungseinheit,
erste Anschlüsse (7) zum Verbinden der besagten Box (B) mit einem Kommunikationsnetz,
zweite Vorrichtungen (9, 10, 11, 12, 13) zum Anschließen der besagten Box (B) an ein Bildsendegerät,
Vorrichtungen (8) für den Datenaustausch mit einer externen Einheit,
schließlich eine Kamera und/oder ein Mikrophon (C), die in der besagten Box (B) integriert sind oder nicht,
schließlich einen Lautsprecher, der in der Box (B) integriert ist oder nicht,
schließlich eine Anrufanzeige, und
eine Zelle (5) anhand derer die Box (B) über eine Fernsteuerungsvorrichtung (RC) angesteuert werden kann; und
b) einen Softwareabschnitt
umfassend eine Netzwerk-Management-Schnittstelle, auf die von außen zugegriffen werden kann, um sie über ein Gerät in der Art eines Computers oder Mobiltelefons zu konfigurieren, das mit demselben Netzwerk verbunden ist, wie die besagte Box (B),
wobei der besagten Box (B) eine einzige vordefinierte Adresse zugeordnet wird, anhand derer sie im Kommunikationsnetz, mit dem sie verbunden ist, lokalisiert werden kann,
und der besagte Softwareabschnitt folgendes umfasst
einen Webserver (WS),
einen Server, durch den Netzwerkübertragungen durch das Verschlüsseln von Daten gesichert werden können,
einen Datenbankserver (DB), einen Videoserver und einen Webclient, der es ermöglicht, die vom Webserver generierten Seiten (WS) auf dem Bildsendegerät anzuzeigen;
- wobei die besagte Fernsteuerungsvorrichtung (RC) folgendes umfasst Sendevorrichtungen für die Kommunikation mit der besagten Zelle (5) der Box (B) und Steuerknöpfe (22), anhand derer das Versenden der vom Webserver (WS) der besagten Box (B) generierten Seiten auf dem Bildsendegerät aktiviert wird oder nicht, und anhand derer der Lautsprecher, das Mikrophon und die Kamera (C), die in der besagten Box (B) enthalten sind, aktiviert werden oder nicht;
- einen Administrationsserver (AS) der Box(en) (B) des Systems, der mit demselben Kommunikationsnetz verbunden ist, wie diese Box(en) (B).

2. - Kommunikationssystem nach Anspruch 1, **dadurch gekennzeichnet, dass** das besagte Kommunikationsnetz Internet oder ein GSM, RTC, VOIP oder TOIP Netz ist.

3. - Kommunikationssystem nach Anspruch 1 oder 2, **dadurch gekennzeichnet, dass** das besagte Bild- und/oder Tonsendegerät ein TV-Gerät ist.

4. - Kommunikationssystem nach einem der Ansprüche 1 bis 3, **dadurch gekennzeichnet, dass** die besagten Vorrichtungen (8) für den Datenaustausch mit einer externen Einheit durch eine USB Schnittstelle (8) gebildet werden.

5. -. Kommunikationssystem nach einem der Ansprüche 1 bis 4, **dadurch gekennzeichnet, dass** die besagte Fernsteuerungsvorrichtung eine Fernbedienung (RC) ist.

6. - Kommunikationssystem nach einem der Ansprüche 1 bis 5, **dadurch gekennzeichnet, dass** der besagte Server, durch den Netzwerkübertragungen durch das Verschlüsseln von Daten gesichert werden können, ein OpenSSL Server ist.

7. - Kommunikationssystem nach einem der Ansprüche 1 bis 6, **dadurch gekennzeichnet, dass** der besagte Datenbankserver (DB) ein Standard My SQL Server ist.

8. . - Kommunikationssystem nach einem der Ansprüche 1 bis 7, **dadurch gekennzeichnet, dass** der besagte Videoserver ein Red5 oder FMS Server ist.

9. - Kommunikationssystem nach einem der Ansprüche 1 bis 8, **dadurch gekennzeichnet, dass** der besagte Webserver (WS) ein Standard Apache Server ist.

10. - Kommunikationssystem nach einem der Ansprüche 1 bis 9, **dadurch gekennzeichnet, dass** der besagte Webclient jener ist, der unter der Markenbezeichnung Flashplayer® oder Adobe Integrated Runtime AIR® vermarktet wird.

11. - Kommunikationssystem nach einem der Ansprüche 1 bis 10, **dadurch gekennzeichnet, dass** die Steuerknöpfe (22) der besagten Fernbedienung (RC) eine Auflagefläche aufweisen, die zumindest jener eines Fingerabdrucks entspricht.

12. - Kommunikationssystem nach einem der Ansprüche 1 bis 11, **dadurch gekennzeichnet, dass** die besagte Fernbedienung (RC) ein Gehäuse (21) umfasst, das aus einem elastischen und/oder saugfähigen Material gefertigt ist, um ihre Struktur gegen Stöße zu schützen.

## Revendications

1. - Système de communication vidéo et vocale contrôlé par un dispositif de commande à distance (RC), **caractérisé en ce qu'**il comprend :
- au moins un boîtier (B) comprenant :
a) une partie matérielle incluant, outre une unité de stockage de donnée,
une mémoire vive,
un processeur,
des moyens pour faire fonctionner ledit boîtier (B) comme une unité de traitement de données autonome,
des premiers moyens de liaison (7) reliant ledit boîtier (B) à un réseau de communication,
des deuxièmes moyens (9, 10 ,11 ,12 ,13) reliant ledit boîtier (B) à un appareil de diffusion d'images,
des moyens d'échange de données (8) avec une unité externe,
au moins une caméra et/ou un microphone (C) intégré ou non dans ledit boîtier (B),
au moins un haut-parleur intégré ou non dans ledit boîtier (B),
au moins un indicateur d'appel, et
une cellule (5) permettant au boîtier (B) d'être contrôlé par ledit dispositif de commande à distance (RC) ; et
b) une partie logicielle incluant une interface de gestion réseau accessible et configurable à distance par l'intermédiaire d'un appareil de type ordinateur ou téléphone portable relié au même réseau que ledit boîtier (B),
ledit boîtier (B) comportant une adresse unique prédéfinie permettant de le repérer sur le réseau de communication auquel il est relié ;
ladite partie logicielle comprend en outre :
un serveur Web (WS),
un serveur permettant de sécuriser les transmissions sur le réseau par cryptage des données,
un serveur de base de données (DB),
un serveur vidéo et
un client web permettant d'afficher les pages générées par le serveur Web (WS) sur l'appareil de diffusion d'images ;
- ledit dispositif de commande à distance (RC), incluant
des moyens d'émission permettant de communiquer avec ladite cellule (5) du boîtier (B) et
des boutons de commande (22) permettant d'activer ou non la diffusion des pages générées par le serveur Web (WS) du dit boîtier (B) sur l'appareil de diffusion d'images, et d'activer ou non le haut-parleur, le microphone et la caméra (C) du dit boîtier (B) ;
- un serveur d'administration (AS) du ou des boîtiers (B) du système, relié au même réseau de communication que ce ou ces boîtiers (B).

2. - Système de communication selon la revendication 1, **caractérisé en ce que** ledit réseau de communication est le réseau Internet ou un réseau GSM, RTC, VoIP ou ToIP.

3. - Système de communication selon la revendication 1 ou la revendication 2, **caractérisé en ce que** ledit appareil de diffusion d'images et/ou de sons est un téléviseur.

4. - Système de communication selon l'une des revendications 1 à 3, **caractérisé en ce que** lesdits moyens d'échange de données avec une unité externe sont constitués par une interface USB (8).

5. - Système de communication selon l'une des revendications 1 à 4, **caractérisé en ce que** ledit dispositif de commande à distance est une télécommande (RC).

6. - Système de communication selon l'une des revendications 1 à 5, **caractérisé en ce que** ledit serveur permettant de sécuriser les transmissions sur le réseau par cryptage des données est un serveur OpenSSL.

7. - Système de communication selon l'une des revendications 1 à 6, **caractérisé en ce que** ledit un serveur de base de données (DB) est un serveur de type MySQL (DB).

8. - Système de communication selon l'une des revendications 1 à 7, **caractérisé en ce que** ledit serveur vidéo est un serveur Red5 ou FMS.

9. - Système de communication selon l'une des revendications 1 à 8, **caractérisé en ce que** ledit serveur web (WS) est un serveur Apache standard.

10. - Système de communication selon l'une des revendications 1 à 9, **caractérisé en ce que** ledit client web est celui commercialisé sous la marque Flashplayer ou Adobe Integrated Runtime AIR.

11. - Système de communication selon l'une des revendications 1 à 10, **caractérisé en ce que** les boutons de commande (22) dudit dispositif de commande à distance (RC) ont une surface d'appui au moins égale à la surface 30 de l'empreinte d'un doigt.

12. - Système de communication selon l'une des revendications 1 à 11, **caractérisé en ce que** ledit dispositif de commande à distance (RC) comprend une enveloppe (21) réalisée en un matériau élastique et/ou absorbant, afin de protéger sa structure contre les chocs.
